# EUROPEAN PATENT APPLICATION

(11) **EP 2 050 809 A1**
(43) Date of publication of application: **22.04.2009**
(21) Application number: 07254059.4
(22) Date of filing: 12.10.2007
(51) Int. Cl.: C10G 1/00, E21B 43/16, C01B 3/36, C01B 3/38

(54) **Process for obtaining hydrocarbons from a subterranean bed of oil shale or of bituminous sand**

(71) Applicant: INEOS EUROPE LIMITED, Lyndhurst Hampshire SO43 7FG (GB)
(72) Inventor: The designation of the inventor has not yet been filed
(74) Representative: King, Alex

(57) **Abstract**

The present invention relates to a process for recovering hydrocarbons, and in particular to a process for recovering hydrocarbons from a subterranean bed of oil shale or of bituminous sands, said process comprising:
1) autothermally cracking a paraffinic hydrocarbon and a molecular-oxygen containing gas to produce a product stream comprising olefins, carbon monoxide, carbon dioxide, hydrogen and steam at a temperature in excess of 300°C; and either
2a) passing the product stream from the autothermal cracking reaction into the bed of oil shale wherein the kerogen in the oil shale is converted to kerogen-derived hydrocarbons; and
3a) removing from the bed of oil shale a hydrocarbon stream comprising said kerogen-derived hydrocarbons, or
2b) passing the product stream from the autothermal cracking reaction into the bed of bituminous sands wherein the bitumen in the bituminous sands is melted; and
3b) removing from the bed of bituminous sands a hydrocarbon stream comprising said melted bitumen.

## Description

The present invention relates to a process for recovering hydrocarbons, and in particular to a process for recovering hydrocarbons from a subterranean bed of oil shale or of bituminous sands using the product stream from an autothermal cracking reaction.

The majority of crude oil as used today is removed by drilling wells into porous rock formations in the upper strata of the Earth's crust. However, a significant amount of crude oil can also be found in what are known variously as "oil sands", "tar sands" or "bituminous sands". These are a mixture of sand or clay, water, and heavy crude oil.

Such deposits must generally be strip mined or the oil therein made to flow into producing wells by in situ techniques which reduce the oil's viscosity using steam and/or solvents. These processes use a great deal of water and require large amounts of energy.

A further source of potentially valuable hydrocarbons is "oil shale" which is generally a mixture of sedimentary rock, typically containing clay with fine sand, calcite, dolomite, and iron compounds, and an organic mixture of complex chemical compounds collectively referred to as "kerogen". When the oil shale is heated the kerogen may react to produce products in the form of oil, gas and residual carbon which can be separated. As with tar sands, the processes for recovering useful hydrocarbons from oil shale may involve mining procedures and then subsequently treating the oil shale above-ground. Such techniques are generally expensive, and can also be environmentally contentious. Thus, it would be preferred to recover hydrocarbon products from tar sands or oil shale by in situ processing. However, in situ processes are generally not as efficient as above-ground processes in terms of total product recovery.

US 7,048,051 describes a process for the recovery of products from oil shale which can be used in subterranean oil shale formations at any depth and without requiring rubilization (breaking up of the oil shale formation to provide a substantial particle size reduction, typically by triggering underground explosions so as to break up the oil shale formation).

In the process of US 7,048,051 heated and pressurised process gas at a temperature sufficient to convert the kerogen in the oil shale to hydrocarbonaceous products is introduced into the oil shale formation through a gas inlet, thereby creating a non-burning thermal energy front within the oil shale so as to convert kerogen in the oil shale to hydrocarbonaceous products and hydrocarbonaceous products are removed from the oil shale by withdrawing the processing gas and hydrocarbonaceous products as effluent gas.

The pressurised process gas is heated by passing to an above-ground combustor with enough oxygen to support combustion. A portion of the recovered hydrocarbons may be recycled to the combustor to provide combustible material for fuelling combustion.

Autothermal cracking (ATC) is a route to olefins in which a hydrocarbon feed is mixed with oxygen and passed over an autothermal cracking catalyst. Combustion is initiated on the catalyst surface and the heat required to raise the reactants to process temperature and to carry out the endothermic cracking process is generated in situ. The product stream from the autothermal cracking process typically produces a gaseous stream comprising one or more olefins, hydrogen, carbon monoxide and carbon dioxide. Such a process is described, for example, in EP 0332289 B1; EP 0529793 B1; EP 0709446 A1 and WO 00/14035.

It has now been found that the product stream from an autothermal cracking process may be advantageously used to recover hydrocarbons from a subterranean bed of oil shale or of bituminous sands.

Thus, in a first aspect, the present invention provides a process for recovering hydrocarbons from a subterranean bed of oil shale or of bituminous sands, said process comprising:
1) autothermally cracking a paraffinic hydrocarbon and a molecular-oxygen containing gas to produce a product stream comprising olefins, carbon monoxide, carbon dioxide, hydrogen and steam at a temperature in excess of 300°C; and either
2a) passing the product stream from the autothermal cracking reaction into the bed of oil shale wherein the kerogen in the oil shale is converted to kerogen-derived hydrocarbons; and
3a) removing from the bed of oil shale a hydrocarbon stream comprising said kerogen-derived hydrocarbons, or
2b) passing the product stream from the autothermal cracking reaction into the bed of bituminous sands wherein the bitumen in the bituminous sands is melted; and
3b) removing from the bed of bituminous sands a hydrocarbon stream comprising said melted bitumen.

In the autothermal cracking reaction the paraffinic hydrocarbon is partially combusted with the molecular oxygen containing gas and the heat generated causes cracking of the paraffinic hydrocarbon to produce olefins. The products stream also comprises carbon monoxide, carbon dioxide, hydrogen and steam, unreacted paraffinic hydrocarbons and smaller amounts of heavier hydrocarbons, such as aromatic hydrocarbons. The product stream from an autothermal cracking reaction usually exits the reaction at 850-1050°C, and is quenched to a lower temperature, typically to less than 750°C, to minimise further reaction and maintain olefin selectivity.

In a "stand-alone" autothermal cracking process, this stream is then subjected to further cooling, especially via heat recovery steps, and separations of the desired olefins from the other products.

In the process of the present invention the autothermal cracking product stream, preferably after quenching, is passed into a bed of oil shale or bituminous sands.

In one embodiment of the present invention the product stream is passed into a bed of oil shale, and the present invention provides a process for recovering hydrocarbons from a subterranean bed of oil shale, said process comprising:
1) autothermally cracking a paraffinic hydrocarbon and a molecular-oxygen containing gas to produce a product stream comprising olefins, carbon monoxide, carbon dioxide, hydrogen and steam at a temperature in excess of 300°C;
2a) passing the product stream from the autothermal cracking reaction into the bed of oil shale wherein the kerogen in the oil shale is converted to kerogen-derived hydrocarbons; and
3a) removing from the bed of oil shale a hydrocarbon stream comprising said kerogen-derived hydrocarbons,

In this embodiment, the autothermal cracking product stream provides the heat for the thermal conversion of the kerogen in the oil shale, in a manner analogous to US 7,048,051.

In a second embodiment of the present invention the product stream is passed into a bed of bituminous sands, and the present invention provides a process for recovering hydrocarbons from a subterranean bed of bituminous sands, said process comprising:
1) autothermally cracking a paraffinic hydrocarbon and a molecular-oxygen containing gas to produce a product stream comprising olefins, carbon monoxide, carbon dioxide, hydrogen and steam at a temperature in excess of 300°C;
2b) passing the product stream from the autothermal cracking reaction into the bed of bituminous sands wherein the bitumen in the bituminous sands is melted; and
3b) removing from the bed of bituminous sands a hydrocarbon stream comprising said melted bitumen.

In this embodiment, the autothermal cracking product stream provides the heat for the melting of the bitumen. Due to the additional presence of steam in the product stream from the autothermal cracking reaction this process may be considered analogous to the process of steam assisted gravity drainage (SAGD) that can be applied to bituminous sands. SAGD has been applied, for example, at the Athabasca Oil Sands in Canada, and an example of such a process is described in CA2330094.

The present invention thus uses the inherent heat energy in the autothermal cracking product stream to recover the hydrocarbons in the bed of oil shale or bituminous sands. Whilst the autothermal cracking reaction product stream is generally suitable for these processes because of the high temperature of the product stream, the autothermal cracking process has been found to be particularly well suited to such integration and also to provide a number of other advantages compared to known processes for hydrocarbon recovery from such beds. In particular:
1) The autothermal cracking reaction is a short contact time/high space velocity reaction, meaning that the hot product stream is obtained with high linear velocity suitable for rapid injection into the bed of oil shale or bituminous sands,
2) The autothermal cracking reaction may be operated at high pressures, for example across the range 5 to 50 barg, without significant detriment, and in particular the pressure of reaction can be selected such that the product stream can be obtained at a pressure suitable for the depth of the bed of oil shale or bituminous sands into which it is to be introduced,
3) The economics of the autothermal cracking reaction are not as sensitive to scale as other olefin production processes, such as steam cracking, and so the autothermal cracking reaction can be designed to and economically operated at the scale required for the provision of the required amount of product gas,
4) Many of the components of the autothermal cracking product stream are beneficial to the recovery processes for the oil shale or bituminous sands. In particular, with regards to the recovery of hydrocarbons from oil shale:
   a. The autothermal cracking products stream comprises H2 which can act as a hydrocracking reagent, (Such reactions may be "catalysed" by subsurface rock mineralisations.)
   b. The autothermal cracking products stream also comprises steam which can also act as a cracking agent and provide steam stripping effects. This is particularly so where water or steam is used as a quenchant for the reaction products. In addition steam is a good thermal heat carrier,
   c. The autothermal cracking products stream comprises CO2 which is a known agent for enhanced oil recovery (EOR) and, as described in US 7,048,051, can also aid migration of the thermal energy front within the body of oil shale, and
   d. The autothermal cracking products stream comprises aromatics. Condensation of such components under appropriate pressure and temperature conditions will have a solvent wash effect on any oil/bitumen, reducing viscosity and improving its displacement from the rock pore structure by gases such as steam, CO2 or CO, light paraffins or olefins

The hydrocracking ability of the autothermal cracking product stream is believed to be particularly advantageous for deeper beds of oil shale or bituminous sands, where higher downhole pressures and temperatures are required.

Thus, whilst the process of the present invention may be applied to beds of oil shale or bituminous sands at any depth, such as from 25m or less down to 1000m or more below the ground, it is especially suitable at depths of 100m or more below the ground.

Although the autothermal cracking reaction may be performed sub-surface, as described further below, the autothermal cracking reaction of the process of the present invention is otherwise "conventional", for example as described in EP 0332289 B1; EP 0529793 B1, WO 2004/074222 and WO 2006/077368. WO 2004/074222, for example, describes a particularly preferred reactor configuration for mixing of reactants, reaction and quenching of the products.

In particular, the paraffinic hydrocarbon to be cracked is preferably one or more paraffinic hydrocarbons having two or more carbon atoms. Ethane, propane, butanes or mixtures thereof are particularly preferred, although methane and heavier paraffinic hydrocarbons may also be used. In a most preferred embodiment of the present invention, the paraffinic hydrocarbons for the autothermal cracking reaction of step (1) are themselves derived from the recovered hydrocarbon products from the bed of oil shale or bituminous sands, for example, from the kerogen derived hydrocarbons obtained from the bed of oil shale. As used herein, "kerogen-derived hydrocarbons" are hydrocarbons resulting from conversion of the kerogen as opposed to those present from the autothermal cracking product stream. For avoidance of doubt, the hydrocarbon stream removed from bed of oil shale comprises both the kerogen-derived hydrocarbons and hydrocarbons resulting from autothermal cracking process.

The paraffinic hydrocarbons to be cracked in step (1) may be used substantially pure or may be in admixture with other hydrocarbons and optionally other materials, for example nitrogen, carbon monoxide, carbon dioxide, and steam.

The molecular oxygen-containing gas may be any suitable molecular oxygen-containing gas, including air or oxygen, optionally diluted with an inert gas such as nitrogen, argon or helium. A molecular oxygen-containing gas enriched in molecular oxygen relative to air (by which is meant having more than 21 % oxygen) and oxygen itself are most preferred.

The paraffinic hydrocarbon and the oxygen-containing gas may be contacted with the catalyst bed in any suitable molar ratio, provided that the ATC product stream comprising olefins is produced. The preferred stoichiometric ratio of hydrocarbon to oxygen is 5 to 16, preferably, 5 to 13.5 times, preferably, 6 to 10 times the stoichiometric ratio of hydrocarbon to oxygen required for complete combustion of the hydrocarbon to carbon dioxide and water.

In a preferred embodiment, hydrogen is co-fed to the reaction. Combustion of hydrogen to generate heat for the autothermal cracking reaction reduces the amount of hydrocarbon combustion necessary, improving the selectivity of the process. Suitably, the molar ratio of hydrogen to oxygen is in the range 0.2 to 4, preferably, in the range 0.2 to 3.

In a particular embodiment, a diluent, especially steam, may be added to the feed to the autothermal cracking reaction. An example of such a process can be found in WO 2006/007368.

Preferably, the autothermal cracking reaction of the present invention produces a product stream comprising ethylene, and in particular with ethylene as the predominant olefinic product. (The severity of the autothermal cracking reaction may be altered to alter the product distribution, for example by adding more or less hydrogen to the feed or changing the space velocity, but is usually selected to produce predominantly ethylene, this generally being the most valuable olefinic product.)

The autothermal cracking reaction preferably uses a catalyst, in particular a catalyst capable of supporting combustion beyond the normal fuel-rich limit of flammability. Preferred catalysts for the autothermal cracking step (1) of the process of the present invention are based on Group VIII metals as the catalytic component. Suitable Group VIII metals include platinum, palladium, ruthenium, rhodium, osmium and iridium. Rhodium, and more particularly, platinum and palladium are preferred, especially platinum. The catalyst is preferably supported, and may optionally be promoted.

Any suitable support material may be used, such as ceramic or metal supports, but ceramic supports are generally preferred. Where ceramic supports are used, the composition of the ceramic support may be any oxide or combination of oxides that is stable at high temperatures of, for example, between 600°C and 1200°C. The support material preferably has a low thermal expansion co-efficient, and is resistant to phase separation at high temperatures.

Suitable ceramic supports include cordierite, mullite, lithium aluminium silicate (LAS), alumina (e.g. α-Al₂O₃), stabilised zirconias, alumina titanate, niascon, and calcium zirconyl phosphate. The ceramic supports may be wash-coated, for example, with γ-Al₂O₃.

The support is preferably in the form of a foam or a honeycomb monolith but may also be in the form of spheres or extrudate.

Suitable catalysts based on promoted or modified Group VIII metals are described, for example, in WO 00/14035 and WO 00/14037.

The autothermal cracking reaction may be operated at any suitable pressure, but preferably is operated at a pressure of at least 5barg. Preferably the autothermal cracking reaction is operated at a pressure of between 10-50barg and advantageously between 20-40 barg.

The product stream from the autothermal cracking reaction usually exits the reaction (catalyst bed where used) at a temperature of at least 750°C, typically in the range 750°C to 1200°C and most typically in the range 850-1050°C.

The product stream is usually quenched to a lower temperature, typically to less than 750°C and preferably to less than 600°C, to minimise further reaction and maintain olefin selectivity. This is preferably achieved by injecting high pressure steam into the product stream, which not only serves to provide the required temperature reduction but provides further steam in the resulting product stream which is useful for the subsequent hydrocarbon recovery from the bed of oil shale or bituminous sands. Steam is a particularly convenient quenchant where steam is also provided as a diluent for the autothermal cracking reaction feed. Alternatively liquid water provided at pressure may be used as a quenching agent which on contact with the product gas is vapourised, also generating additional steam. If so desired, an oil fraction derived from the kerogen derived hydrocarbons may be used as part of the overall recovery process of kerogen from the shale, for example the oil fraction may deployed in a sequence with steam or water. The steam or water used aids residual hydrocarbons removal from the oil shale or bituminous sands.

In the process of the present invention step (1) usually produces a (quenched) product stream at a temperature in the range 300°C to 600°C, especially in the range 400°C to 600°C which is subsequently passed into the bed of oil shale or bituminous sands.

The paraffinic hydrocarbon feed and the molecular oxygen-containing gas are preferably fed to the autothermal cracking reaction in admixture under a Gas Hourly Space Velocity (GHSV) of at least 100,000 hr⁻¹. Preferably, the GHSV exceeds 200,000 hr⁻¹, especially greater than 1,000,000 hr⁻¹. The most preferred gas hourly space velocity is a pressure dependent gas hourly space velocity, usually of greater than 10,000 h⁻¹ barg⁻¹, preferably greater than 20,000 h⁻¹ barg⁻¹ and, most preferably, greater than 100,000 h⁻¹ barg⁻¹. For example, at 20 barg pressure, the gas hourly space velocity is most preferably greater than 2,000,000 h⁻¹.

In the process of the present invention, the autothermal cracking reaction may be performed in a reactor at the surface, and the product stream then passed into the bed of oil shale or bituminous sands. The product stream may then be passed subsurface and into the bed of oil shale or bituminous sands and the produced hydrocarbon stream recovered by any suitable means. A particularly preferred example is a gas inlet and effluent outlet as described in US 7,048,051.

In a particular embodiment of the present invention, the autothermal cracking reaction may itself be performed sub-surface, in particular within an inlet pipe into the bed of oil shale or bituminous sands. In this embodiment, the diameter of the inlet pipe determines the size of the reactor, and is typically in the range 50 to 600mm, preferably in the range 200 to 400mm. The reactant gases, at pressure, are passed into the inlet pipe, mixed and contacted with the catalyst subsurface, and the product stream passed, usually via a quenching section, out of the pipe and into the bed of oil shale or bituminous sands. This embodiment has the advantages that the external atmosphere around the reactor subsurface will also be at elevated pressure (by being subsurface), reducing the containment requirements for the reaction at pressure, and that the hot product stream is produced closer to the bed of oil shale or bituminous sands. A particular advantage of performing the reaction subsurface is that reactor product heat losses to the surrounding geology from the surface to the target hydrocarbon resource zone are avoided and thus the scheme is much more energy efficient. It is envisaged that multiple inlet pipes containing ATC reactors would be deployed at a suitable lateral spacing from each other and at optimum but possibly differing depths in order to maximise recovery of hydrocarbons from a defined area of shale or sands.

The removed hydrocarbon stream from bed of oil shale or bituminous sands will comprise the hydrocarbons derived from the bed of oil shale or bituminous sands and the hydrocarbons resulting from autothermal cracking process, including olefins, and thus will include both paraffinic and olefinic hydrocarbons. The removed stream will also comprise carbon dioxide, steam, hydrogen, carbon monoxide and other components that would normally be found in the respective streams. The majority of the separation steps required for the removed stream will be those conventionally applied to the separate streams, for example applied to recovered bitumen or kerogen-derived hydrocarbons and applied to an autothermal cracking product stream. Usually, the stream is treated to remove the "heavier" hydrocarbons resulting from the bed of oil shale or bituminous hydrocarbons e.g. heavy crude oil, and the resulting lighter hydrocarbons are passed to the typical separation steps for an autothermal cracking process.

In particular, the removed hydrocarbon stream from bed of oil shale or bituminous sands, comprising the kerogen-derived hydrocarbons or melted bitumen along with the hydrocarbons resulting from autothermal cracking reaction, may be treated by:
i) separating the removed hydrocarbon stream into a liquid stream comprising liquid hydrocarbons, solids and water and a gaseous stream comprising gaseous hydrocarbons, including olefins,
ii) passing the liquid stream to one or more separation steps to separate the hydrocarbons therein from solids and water, and
iii) passing the gaseous stream to one or more separation steps to separate the olefins therein.The separations steps for (ii) and (iii) are those typical for such streams from the respective conventional autothermal cracking and oil recovery processes.

For avoidance of any doubt, olefin products formed in the autothermal cracking reaction are also generally recovered by the process of the present invention. Thus, where the product stream from the autothermal cracking reaction comprises ethylene as the predominant olefinic product, although some ethylene may dimerise or trimerise to form heavier species (and which actually might act to enhance hydrocarbon recovery), and some might be hydrogenated (although carbon monoxide and steam in the product stream generally inhibit this) a significant portion of the olefins present will be recovered "intact".

The present invention is illustrated by the following Figures, wherein:
Figure 1 presents schematically an ATC reactor assembly suitable for subsurface use, and
Figure 2 presents schematically a suitable scheme applicable to an oil shale application using such a reactor. Similar processing steps would also be envisaged for a bituminous sands extraction application.

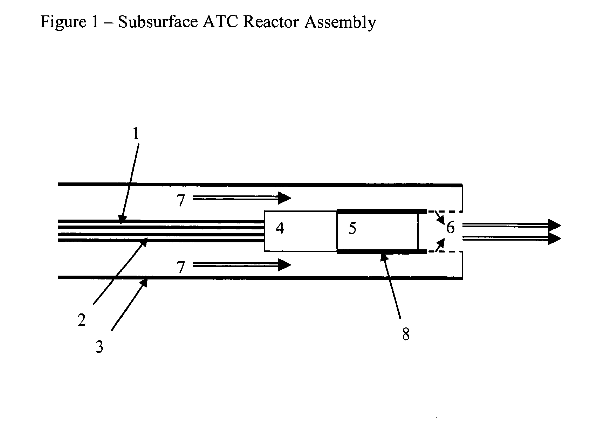

With regards to Figure 1, the ATC reactor assembly is located subsurface, as one of potentially many reactors, in a zone of oil shale. Required gas/liquid supplies, including an oxygen-containing gas, hydrocarbon feedstock and quenchant (usually steam or water) are passed from the surface in individual supply pipes. Other feed materials to the ATC reactor, such as hydrogen or inert gases, which may be required may also be provided, usually through one or other of the oxygen-containing gas or hydrocarbon feedstock supply pipes (in order to minimise the subsurface complexity). For example, hydrogen, if used, can be mixed with the hydrocarbon feedstock at the surface and the mixture passed through the hydrocarbon supply pipe. In a preferred embodiment, first and second supply pipes for the hydrocarbon feedstock (1) and the oxygen-containing gas (2) are contained within an outer pipe (3) though which the quenchant (preferably steam) is provided. The ATC reactor assembly comprises a mixer block (4) comprising several gas mixing nozzles, wherein the oxygen-containing gas and hydrocarbon feedstock are mixed, prior to the mixed gases being passed into a catalyst zone (5) containing a catalyst. Reaction takes place on the catalyst to produce a hot product gas stream which exits into a quench chamber (6) wherein it is quenched by contact with the quenchant. The quenchant supply flows around the outside of the aforementioned mixer block (4) and catalyst zone (5), shown by (7). A thermal insulant (8) is preferably provided between the catalyst zone and the flowing quench agent.

By virtue of the above arrangement the individual hydrocarbon and oxygen-containing gas supply pipes will be heated co-currently by the flowing quenchant providing a desirable preheat to the reactants in an efficient manner. The quenched product stream at the desired temperature enters the oil shale and thermally degrades the kerogen creating an oil that can be recovered by known oil industry techniques such as gas lift, subsurface pumps or by natural reservoir pressure producing an oil and gas mixture which is recovered to surface located processing facilities.

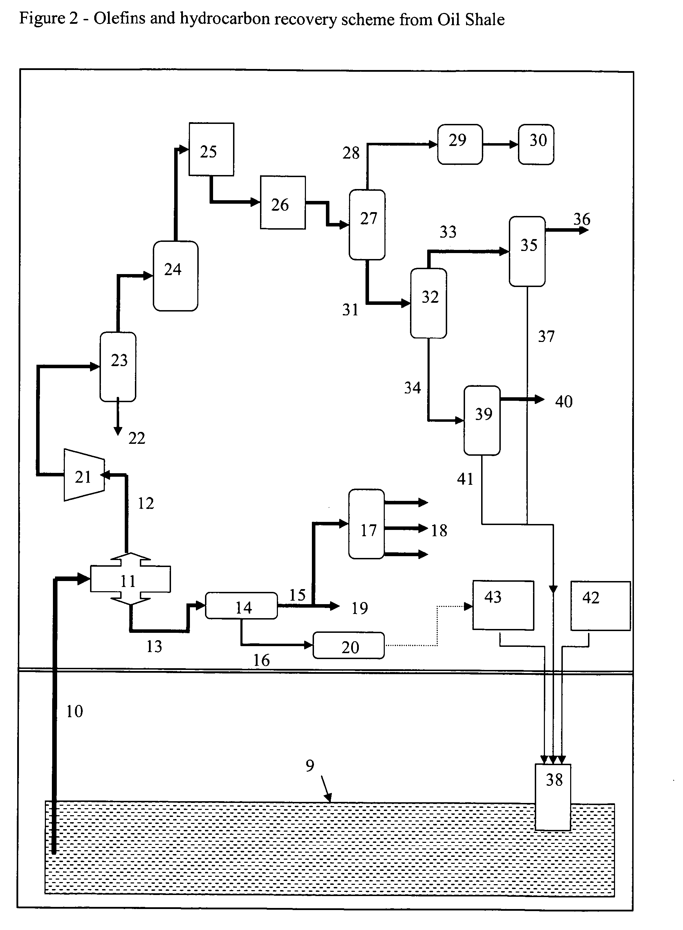

A suitable overall process scheme is shown in Figure 2. The product stream from the oil shale zone (9) is recovered through one or more recovery pipes (10) to suitable surface facilities. Surface facilities typical of any crude oil processing facility may be used. Generally the facilities comprise a first pressure letdown stage or stages (11) whereby light gases (12) are separated from the heavier liquids stream of oil and water (13). The oils and water stream (13) is subsequently passed to treatment (14) to remove any entrained solids (shale or sand particles) and separate the oil (15) from the water (16). The recovered crude oil may be processed by fractional distillation (17) to yield a number of petroleum fractions including Naphtha, kerosene, diesel and gas-oils (18) or alternatively transported to a remote oil refinery, for example via pipeline (19). The produced water (16) would be passed to a treatment unit (20) and optionally re-used for steam raising purposes (shown as dashed line). The light gases (12) comprise acidic species, if present in the oil shale, carbon monoxide, olefins, and light paraffin's would then undergo processing steps to recover the high value olefins and provide a light paraffin and hydrogen stream as feedstock to the ATC reactor. Typical process steps for cracked gas streams, especially autothermal cracking product streams may be used. Typical steps comprise the steps of gas compression (21), condensates (C4 hydrocarbons & heavier) removal (22) in a depropaniser (23), acid gas treating (24) typically for CO₂ and H₂S removal, using for example an amine system, followed by gas drying (25), for example via molecular sieve technology. The product stream from these processes would suitably be passedto steps for recovery of olefins, such as cryogenic separation. Conventional cryogenic recovery schemes typically comprise gas cooling (26) followed by demethanisation (27) to remove predominately CO, CH₄ and residual hydrogen as an overhead stream (28) which can then be passed into a reformer (29) to generate hydrogen which is then purified (30) for use in hydrogenation units. Either pure or impure (i.e. that containing CO or residual CH₄) hydrogen leaving the reformer is in addition preferably used as a co-feed with the C2 and C3 paraffinic hydrocarbon to the ATC reactor (not shown). The liquid stream (31) leaving the base of the demethaniser is then passed to a deethaniser (32) which separates by distillation the C2 stream (33) from the C3 stream (34) each of these streams thence passing through a suitable hydrogenation step (not shown) to remove acetylenes and dienes. The hydrogenated C2 stream is then passed into an ethylene tower (35) for polymer grade ethylene recovery (36) with the resulting bottom product ethane (37) being recycled as a feedstock component to the ATC reactor (38). The C3 stream (34) may be fractionated in a C3 splitter (39) to give a product stream at desired propylene purity (40) and a propane stream (41) for use also as a feed to the ATC reactor (38) as required.

Typically the ethane (37) and propane (41) streams are combined in a single pipe (equivalent to 2 from Figure 1), and passed with oxygen-containing gas from an oxygen unit (42) and steam from a steam generating unit (43) to the ATC reactor. Alternative schemes which avoid cryogenic distillation are known in the olefins industry and such schemes could easily be used in place of several components of the above disclosed recovery technique. A particular advantage of the ATC reactor technology is its ability to tolerate levels of olefinic hydrocarbons in the feedstock thus allowing use of olefin capture technologies which do not achieve 100% olefins recovery such as that disclosed in EP699468 and EP705811 where an aqueous complexing solution is used for recovery or technologies such as membranes or facilitated membranes in which situations any un-recovered olefins are fully recyclable to the ATC reactor as feedstock.

## Claims

1. A process for recovering hydrocarbons from a subterranean bed of oil shale or of bituminous sands, said process comprising:
1) autothermally cracking a paraffinic hydrocarbon and a molecular-oxygen containing gas to produce a product stream comprising olefins, carbon monoxide, carbon dioxide, hydrogen and steam at a temperature in excess of 300°C; and either
2a) passing the product stream from the autothermal cracking reaction into the bed of oil shale wherein the kerogen in the oil shale is converted to kerogen-derived hydrocarbons; and
3a) removing from the bed of oil shale a hydrocarbon stream comprising said kerogen-derived hydrocarbons,
or
2b) passing the product stream from the autothermal cracking reaction into the bed of bituminous sands wherein the bitumen in the bituminous sands is melted; and
3b) removing from the bed of bituminous sands a hydrocarbon stream comprising said melted bitumen.

2. A process according to claim 1, wherein the product stream is passed into a bed of oil shale, and the present invention provides a process for recovering hydrocarbons from a subterranean bed of oil shale.

3. A process according to claim 1, wherein the product stream is passed into a bed of bituminous sands, and the present invention provides a process for recovering hydrocarbons from a subterranean bed of bituminous sands.

4. A process as claimed in any one of the preceding claims wherein the bed of oil shale or bituminous sands is present at a depth of 100m or more below the ground.

5. A process as claimed in any one of the preceding claims wherein the autothermal cracking reaction of step (1) is operated at a pressure of at least 5barg.

6. A process as claimed in any one of the preceding claims wherein step (1) produces a quenched product stream at a temperature in the range 300°C to 600°C.

7. A process as claimed in any one of the preceding claims wherein the autothermal cracking reaction is itself performed sub-surface.

8. A process as claimed in any one of the preceding claims wherein the removed hydrocarbon stream from bed of oil shale or bituminous sands, comprising the kerogen-derived hydrocarbons or melted bitumen along with the hydrocarbons resulting from autothermal cracking reaction, is treated by:
i) separating the removed hydrocarbon stream into a liquid stream comprising liquid hydrocarbons, solids and water and a gaseous stream comprising gaseous hydrocarbons, including olefins,
ii) passing the liquid stream to one or more separation steps to separate the hydrocarbons therein from solids and water, and
iii) passing the gaseous stream to one or more separation steps to separate the olefins therein.
